Europäisches Patentamt

European Patent Office

Office européen des brevets

(19)

(11) Publication number: **0 035 645**
**B1**

(12) **EUROPEAN PATENT SPECIFICATION**

(45) Date of publication of patent specification: **23.05.84**

(21) Application number: **81100783.0**

(22) Date of filing: **04.02.81**

(51) Int. Cl.³: **B 65 B 15/00**

(54) Method of and apparatus for securing an article to a container.

(30) Priority: **22.02.80 JP 21996/80**

(43) Date of publication of application:
**16.09.81 Bulletin 81/37**

(45) Publication of the grant of the patent:
**23.05.84 Bulletin 84/21**

(84) Designated Contracting States:
**CH DE FR GB IT LI NL SE**

(56) References cited:
**GB-A-2 013 606**

(73) Proprietor: **TETRA PAK INTERNATIONAL AKTIEBOLAG**
**Rabyholms Alle**
**Lund (SE)**

(72) Inventor: **Utsumi, Yoshikazu**
**47, Godaigo Misasagi Higashiuramachi**
**Fushimi-Ku Kyoto (JP)**

(74) Representative: **Glawe, Delfs, Moll & Partner**
**Patentanwälte**
**Postfach 26 01 62 Liebherrstrasse 20**
**D-8000 München 26 (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

The invention relates to a method and an apparatus for head-bonding, such as gluing or welding, each of a series of first articles, such as a drinking straw or the like, to a surface of each of a series of second articles, such as a beverage container or the like, wherein the first articles are successively fed along a first conveying path by holding means and pressed against the surfaces of the second articles moving along a second conveying path.

From GB—A—2 013 606 a method and apparatus of the above mentioned kind is known. In this known device the first articles are adhered to the second articles by means of a special glue (hot-melt) which is applied to the surface of the second article by means of a separate applicator which has to be arranged upstreams from the contact position between first and second articles.

This device has the disadvantage that it is not possible to directly heat seal the first articles against the outer plastic layer of the second article.

To avoid this disadvantage it is the object of the invention to provide a method and apparatus of the aforementioned kind in which no separate application of the special glue by means of a separate applicator is required.

This object is solved in a method of the above mentioned kind which is characterized in that the second conveying path is arranged parallel to part of the first conveying path where the first articles are pressed against the surfaces of the second articles, that at least part of each said first article and/or said surface of the second article is made of or coated with a heat-meltable and then adhesive material, and that heat is applied temporarily to said first articles via said holding means whilst being pressed against said surfaces of the second articles.

An apparatus of the above mentioned kind for performing this method according to the invention is characterized by electrical heating means associated to each holding means and in contact with said first articles C held in the holding means, said first and second conveyors forming a side by side conveying path, and stationary electrical contact rails connected to a source of electrical current and extending over part of said conveying path for being contacted by contact means of said heating means when said gripping means are moving along the conveying path.

A preferred embodiment of the invention will be described in detail with reference to the drawings. In the drawings

Fig. 1 is a general plan view of a conveying and bonding means according to an embodiment of the invention;

Fig. 2 is an enlarged perspective view partially taken from the back of Fig. 1;

Fig. 3 is an enlarged plan view of a heater part, partially illustrating it in a cutaway manner;

Fig. 4 is a perspective view of a package containing a straw with 2 films; and

Fig. 5 is a perspective view of a state in which said package is fitted up to a container.

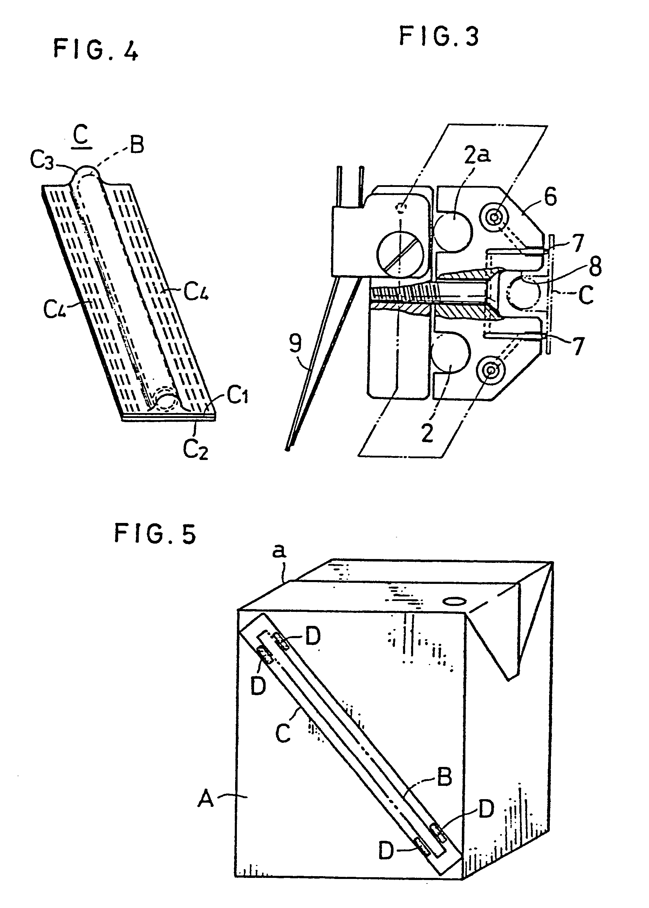

A paper container, so-called pack container as shown in Fig. 5, is used as a container for containing fruit juice or the like.

While there are many cases where a straw is fitted to such a container A, when fruit juice or the like contained therein is on sale, said straw is packed with 2 strips of film for sanitary reasons as shown in Fig. 4. After gluing the packed straw to a side wall of the container A as shown in Fig. 5, the fruit juice or the like contained therein is placed on sale.

For the purpose of such gluing, melt-welding and hot gluing technology by special bonding agent can be utilized. In performing this gluing work, an extremely efficient method lies in the process in which, when a package C is shown in Fig. 4 is conveyed so as to make an access to the container A which is forwarded through another course, such gluing work is arranged to be carried out.

A pair of long pins 2 and 2a is mounted on links 1a and 1a of a pair up-and-down endless chains 1 and 1. A holding device is fixed at the central part of height-wise direction of said pair of pins.

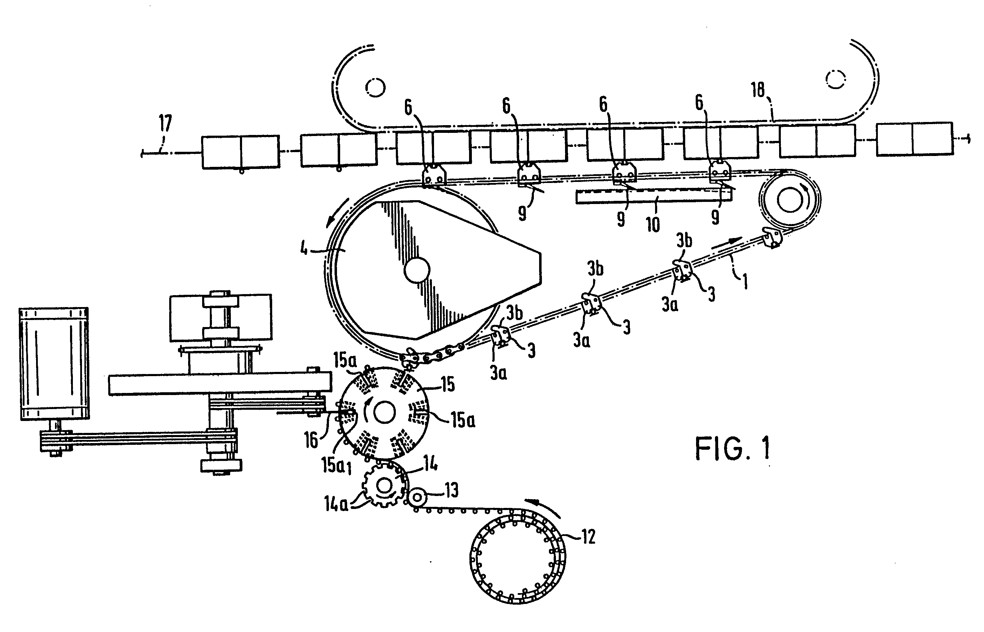

The holding device consists of two holding pieces 3 and 3a. One holding piece 3a is fixed to the pin 2a, another holding piece 3 is rotatably fitted up to the pin 2. A projecting piece 3b is formed on the holding piece 3. When said projecting piece 3b coincides with guide 4 provided within the chain (Fig. 1), the holding piece 3 swings in regard to the holding piece 3a, as if a mouth is opened, thereby making it easy to hold the package C therein and, on the contrary, when such coincidence does not occur, the above-mentioned two holding pieces 3 and 3a are closed together so that it is possible to hold the package C therein. The joint surface of both holding pieces 3 and 3a is notched to form groove 5, in which an expanded part $C_3$ of the package C is preferably adapted to be grasped.

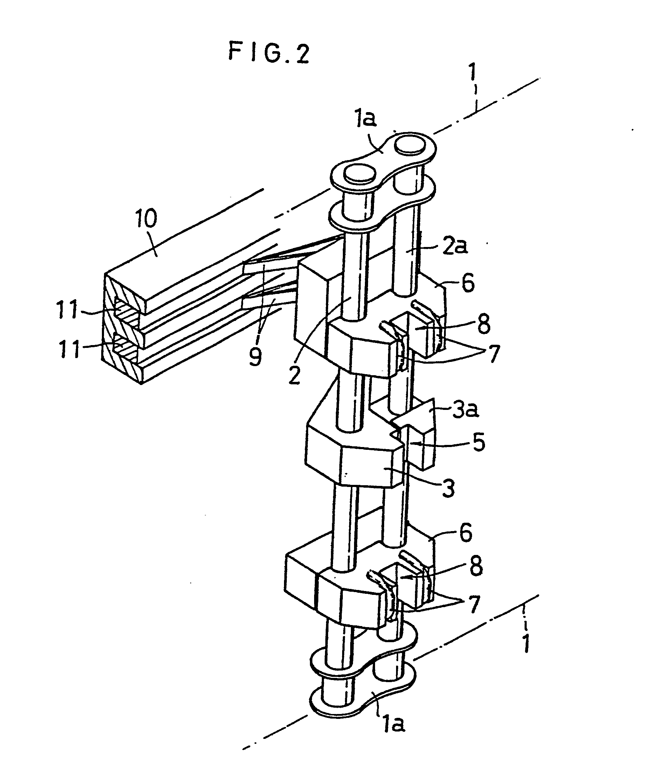

At the upper and lower sides of the above-mentioned holding pieces 3 and 3a a pair of pins 2 and 2a is equipped with heater bases 6 and 6, respectively. Each of said heater bases 6 and 6 is equipped with a heater 7 in a manner, that the partial part of the heater 7 extrudes from the outer side of the heater base 6. (Namely, the partial parts of the heaters 7 and 7 are located toward the front of Fig. 2 and they are on the right of the heater base 6 in Fig. 3).

At the position corresponding to the groove 5 notched between the above-mentioned holding pieces 3 and 3a a groove 8 is disposed between the heaters 7 and 7 extruding from the outer side of the heater base 6, whereby the expanded part $C_3$ of the package C, whose central part is put between the holding pieces 3 and 3a, is set in said groove 8.

The back of the upper heater base 6 is equipped with pair of upper and lower contact segments 9, whose tips are respectively contacted with each of a conductor rails 11 and rail 10 provided within chain 1. With such a composition the upper and lower heaters 7 and 7 make an electrical connection, thereby carrying electricity from outside to the heater.

With regard to other numerical symbols illustrated by the drawings, 12 is a long strip of article continuing the package C in a transversal direction of Fig. 4.

13 is a hold-down roller. 14 is a feed roller which performs an intermittent rotation in a counterclockwise direction of Fig. 1, when signal is given thereto, whereby the long strip of article 12 can be fed out 1 pitch at a time (namely, the distance between a straw and a successive straw in the long strip of article 12). A plurality of grooves 14a are longitudinally (vertically) provided at regular intervals on the periphery of said feed roller 14. The expanded parts $C_3$ of the long strip of article 12 are one by one housed in each of said grooves 14a.

15 is a cutting rotor which, located outside the feed roller 14, is provided near to the above-mentioned chain 11. The periphery of the cutting rotor 15 is longitudinally (vertically) provided at regular intervals with notched grooves 15a, of which front and rear peripheries are adapted to be acted on by a vacuum force. The cutting rotor 15 and the feed roller 14 are synchronously rotated.

16 is a cutter which rotates on its axis, while vertically revolving and plays the role of cutting the long strip of article 12 held by vacuum on the periphery of the cutting rotor 15 into the packages C as shown in Fig. 4. The separated packages C, which are still held by vacuum on the periphery of the cutting rotor 15, are forwarded near to the chain 1 by the rotation thereof.

17 is a conveyor for carrying the containers A which is installed in parallel to the chain 1, travelling at the same speed as that of chain 1. The containers A are carried by the conveyor in a manner than an upper corner's ridge part thereof, shown as in Fig. 5 is positioned right overhead. 18 is a guide which is provided outside the conveyor 17.

When each of the packages C, cut off from the long strip of article 12 by the cutter 16 as shown in Fig. 4, which is still held by vacuum on the periphery of the cutting rotor 15, is forwarded near to the chain 1 by the rotation thereof, one holding piece 3 composing the holding device fitted to the chain 1 travelling at the fixed speed straddles and the holding device makes an access to the periphery of cutting rotor 15 similar to the condition of a mouth being opened. After that, as the projecting part 3b of the holding piece 3 comes off the guide 4, the legs of the holding device close, thereby putting the package C held by vacuum on the periphery of the cutting rotor 15 between them. At that time, the expanded part $C_3$ of the package C is grasped in the groove 5 of the holding device and the grooves 8 and 8 of the up-and-down heater bases 6.

The package C put between the two pieces of the holding device is forwarded in an arrow direction as shown in Fig. 1 by the travelling of the chain and, subsequently, reaches a position to touch the side wall of the container A, which is carried by the conveyor 17, so that said package C, still pressed against the side of the guide 18 by the holding device, is transferred together with the container A to the left direction on Fig. 1.

When the holding device is travelling along the side of the rail 10, the contact segments 9 are respectively by each of the conductor rails 11, thereby carrying electricity from outside to the up-and-down heaters 7 and 7. As a result the electricity is turned on to each of the heaters; while the holding device is travelling along the side of the rail 10, a contact bonding and melt-welding of the package to the side wall of the container are performed at the parts shown as D in Fig. 5 on both of the side edges $C_4$ and $C_4$ of said package C.

Thus, the package C is fitted up to the side wall of the container A in a diagonal direction.

Since the chain 1 and the conveyor 17 continue to be driven without cease, the projecting piece 3b of one holding piece 3 composing the holding device comes to coincide with the guide 4 in due course of time. At this moment the holding piece 3 straddles as if a mouth is opened. For this reason the package C is released from the holding device and the container A to which said package C has been fitted up moved directly to the left side of Fig. 1 by the conveyor 1.

Similarly to the above-mentioned case, the subsequent holding device conveys the following package, which is forwarded, while being still held by vacuum to the periphery of the cutting rotor 15, to the welding process and said package C is melt-welded to the side wall of the container which is subsequently forwarded.

A repetition of this operation enables the conveyed packages as shown in Fig. 4 to be glued one by one to the side wall of the container A which is forwarded from a different course.

According to the present invention, there is an effect of improving the working efficiency, because while an article to be glued, for example the package as shown in Fig. 4, and an article to which said package is glued are being transferred to each other, said package can be glued to the latter article.

The above-mentioned embodiment illustrates the case where the article to be glued is the package containing a straw, whereas the article to which said package is glued is the paper container into which is poured the fruit juice or the like, but the present invention is not restricted to such a case. Needless to say, the embodiment illustrates the case where bonding is performed by melt-welding, but the present invention can be also brought into a practical work in which hot gluing is performed by using a special bonding agent.

## Claims

1. A method for heat-bonding each of a series of first articles (C), such as drinking straw, to a surface of each of a series of second articles (A), such as beverage container, wherein the first articles are successively fed along a first conveying path by holding means (3, 3a) and pressed against the surfaces of the second articles moving along a second conveying path characterized in that the second conveying path is arranged parallel to part of the first conveying path where the first articles are pressed against the surfaces of the second articles, that at least part of each said first article and/or said surface of the second article is made of or coated with a heat-meltable and then adhesive material (D), and that heat is applied temporarily to said first articles via said holding means (3, 3a) whilst being pressed against said surfaces of the second articles.

2. An apparatus for carrying out the method according to claim 1 comprising a first conveyor (1) having the holding means (3, 3a) for gripping the first articles (C) and a second conveyor (17) for the second articles (A), characterized by electrical heating means (6, 7) associated to each holding means (3, 3a) and in contact with said first articles (C) held in the holding means, said first and second conveyors (1, 17) forming a side by side conveying path, and by stationary electrical contact rails (10) connected to a source of electrical current and extending over part of said conveying path for being contacted by contact means (9) of said heating means (6, 7) when said gripping means (3, 3a) are moving along the conveying path.

## Patentansprüche

1. Verfahren zum Heiß-Kleben einer Reihe von ersten Artikeln C, wie z.B. Strohhalmen, jeweils auf eine Oberfläche einer Reihe von zweiten Artikeln A, wie z.B. Getränkebehälter, wobei die ersten Artikel aufeinanderfolgend entlang einem ersten Förderweg durch Haltevorrichtungen (3, 3a) gefördert werden und gegen die Oberflächen der zweiten Artikel gedrückt werden, die sich entlang einem zweiten Förderweg bewegen, dadurch gekennzeichnet, daß der zweite Förderweg parallel zu einem Teil des ersten Förderweges angeordnet ist, wo die ersten Artikel gegen die Oberflächen der zweiten Artikel gedrückt werden, daß mindestens ein Teil eines jeden der ersten Artikel und/oder der Oberfläche des zweiten Artikels aus einem hitzeschmelzbaren und dann klebenden Material D gemacht oder damit beschichtet ist, und daß zeitweise den ersten Artikeln Wärme zugeführt wird über die Haltevorrichtungen (3, 3a), während sie gegen die Oberflächen der zweiten Artikel gedrückt werden.

2. Vorrichtung zum Durchführen des Verfahrens gemäß Anspruch 1, mit einem ersten Förderer (1), der die Haltevorrichtungen (3, 3a) zum Ergreifen der ersten Artikel C aufweist und einem zweiten Förderer (17) für die zweiten Artikel A, gekennzeichnet durch eine elektrische Heizvorrichtung (6, 7), die mit jeder Haltevorrichtung (3, 3a) verbunden ist und in Kontakt steht mit den ersten Artikeln C, die von der Haltevorrichtung gehalten werden, wobei der erste und der zweite Förderer (1, 17) einen nebeneinanderliegenden Förderweg bilden, und durch ortsfeste elektrische Kontaktschienen (10), die mit einer elektrischen Stromquelle verbunden sind und sich über einen Teil des Förderweges erstrecken, um mit einer Kontaktvorrichtung (9) der Heizvorrichtung (6, 7) in Berührung zu kommen, wenn sich die Greifvorrichtung (3, 3a) entlang des Förderweges bewegt.

## Revendications

1. Procédé pour lier à chaud chacun d'une série de premiers articles (C), tels que des chalumeaux pour boire, à une surface de chacun d'une série de seconds articles (A), tels que des récipients à boissons, dans lequel les premiers articles sont avancés les uns à la suite des autres le long d'un premier trajet de transport par des moyens de maintien (3, 3a) et pressés contre les surfaces des seconds articles se déplaçant le long d'un second trajet de transport, caractérisé en ce que le second trajet de transport est disposé parallèlement à une partie du premier trajet de transport, où les premiers articles sont pressés contre les surfaces des seconds articles, en ce qu'au moins une partie de chaque premier article et/ou de ladite surface du second article est réalisée en ou revêtue d'une matière theremofusible, puis adhésive (D), et en ce que de la chaleur est appliquée momentanément auxdits premiers articles par lesdits moyens de maintien (3, 3a) pendant qu'ils sont pressés contre lesdites surfaces des seconds articles.

2. Appareil pour la mise en oeuvre du procédé selon la revendication 1, comprenant un premier transporteur (1) comportant les moyens de maintien (3, 3a) destinés à prendre les premiers articles (C et un second transporteur (17) pour les seconds articles (A), caractérisé par des moyens chauffants électriques (6, 7) associés à chaque moyen de maintien (3, 3a) et en contact avec lesdits premiers articles (C) maintenus dans les moyens de maintien, lesdits premier et second transporteurs (1, 17) formant un trajet de transport côte à côte, et par des rails de contact électrique fixes (10) connectés à une source de courant électrique et s'étendant sur une partie dudit trajet de transport afin d'être contactés par des éléments (9) de contact desdits moyens chauffants (6, 7) lorsque lesdits moyens de préhension (3, 3a) se déplacent le long du trajet de transport.

FIG. 1

0035 645

# FIG.2

FIG. 4

FIG. 3

FIG. 5